# FASCICULE DE BREVET EUROPEEN

(11) **EP 1 686 280 B1**
(45) Date de publication et mention de la délivrance du brevet: **20.08.2008**
(21) Numéro de dépôt: 06007941.5
(22) Date de dépôt: 03.11.2004
(51) Int. Cl.: F16D 55/36

(54) **Atterrisseur, frein pour roue d'aéronef, ensemble de roue freinée d'aéronef, et procédé de maintenance d'un tel atterrisseur**
Landegestell, Bremse für ein Flugzeugrad, gebremstes Flugzeugrad, sowie Verfahren zur Wartung eines solchen Landegestells
Landing gear, brake for an aircraft wheel, braked aircraft wheel, and method for servicing such landing gear

(30) Priorité: 14.11.2003 FR 0313335
(43) Date de publication de la demande: 02.08.2006
(62) Demande divisionnaire de: 04292598.2
(73) Titulaire: MESSIER-BUGATTI, 78140 Velizy, Villacoublay (FR)
(72) Inventeur: Chico, Philippe, 92100 Boulogne Billancourt (FR); Girod, Pierre, 75017 Paris (FR)
(74) Mandataire: Parzy, Benjamin Alain

(56) Documents cités:
- US-A- 4 175 651
- US-A- 6 095 293
- US-B1- 6 581 730

## Description

L'invention concerne un atterrisseur, un frein d'aéronef, un ensemble de roue freinée d'aéronef, et un procédé de maintenance d'un tel atterrisseur.

### ARRIERE-PLAN DE L'INVENTION

On connaît du document US 6 095 293 un frein pour roue d'aéronef, comportant une pile de disques ayant un axe central et une structure de reprise du couple de freinage portant des actionneurs électromécaniques modulaires démontables unitairement s'étendant en regard de la pile de disques pour appliquer de façon commandée une pression sur la pile de disques.

Les actionneurs sont prévus pour être démontés du côté de la structure de reprise de couple opposé à la pile de disques.

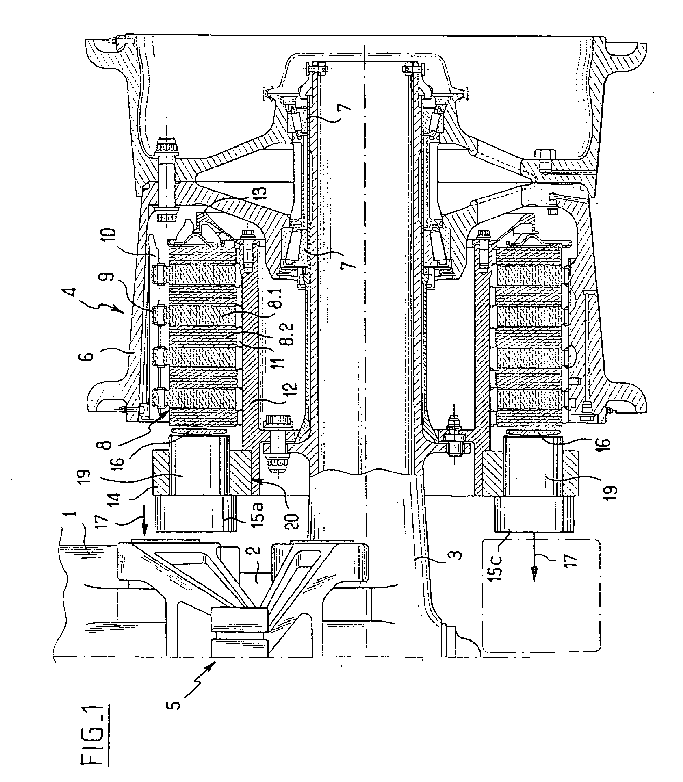

Néanmoins, dans certaines circonstances, il se peut que l'espace entre la structure de reprise de couple et l'atterrisseur soit insuffisant pour permettre le démontage d'un actionneur dans la direction précitée. On considérera à cet égard la figure 1 du document précité illustrant le cas de figure d'un actionneur équipant un frein d'aéronef et disposé, lorsque le frein est monté sur un atterrisseur de l'aéronef, directement en regard de l'atterrisseur de sorte que son démontage est impossible.

Il faut donc démonter la roue, puis le frein, pour permettre le démontage d'un actionneur ainsi disposé, ce qui rendrait la maintenance in situ d'un tel frein très problématique pour la compagnie utilisatrice d'un tel aéronef. En effet, une telle disposition oblige à mettre l'aéronef sur cric, à démonter la roue, puis la pile de disques, pour enfin démonter la structure de reprise de couple pour accéder à l'actionneur concerné. Une telle manipulation rend illusoire toute maintenance in situ limitée au remplacement de cet actionneur. Les compagnies préféreront, tant qu'à démonter l'ensemble de roue freinée, remplacer ledit ensemble par un autre ensemble, pour amener l'ensemble démonté en atelier de maintenance.

### OBJET DE L'INVENTION

L'invention a pour objet de proposer un atterrisseur d'aéronef muni d'un ensemble de roue freinée dont le frein comporte des actionneurs électromécaniques démontables unitairement pouvant être tous remplacés directement sur l'aéronef, sans nécessiter de mettre l'aéronef sur cric pour démonter la roue ou la pile de disques associée au frein.

### BREVE DESCRIPTION DE L'INVENTION

L'invention est relative à un insert text of claim 1

Grâce à ces dispositions selon l'invention, tous les actionneurs sont donc facilement démontables sans démontage de la roue ou la pile de disques. La maintenance in situ redevient techniquement et économiquement envisageable.

Selon un mode particulier de réalisation de l'invention, les actionneurs sont prévus pour être démontés de leur support selon une trajectoire de démontage s'étendant sensiblement dans un plan perpendiculaire à un axe de rotation de la roue.

L'invention est également relative à un procédé de maintenance d'un atterrisseur, comportant l'étape d'identifier un actionneur à remplacer, de le démonter sans démonter ni la roue ni la pile de disques, et de le remplacer par un autre actionneur, et qui comporte selon l'invention l'étape de provoquer le retrait d'un poussoir de l'actionneur à remplacer de façon à amener le poussoir en position rentrée préalablement au démontage de l'actionneur.

### BREVE DESCRIPTION DES DESSINS

L'invention sera mieux comprise à la lumière de la description qui suit en référence aux figures des dessins annexés parmi lesquelles
- la figure 1 est une demi-vue en coupe partielle d'un d'atterrisseur équipé d'un ensemble de roue freinée selon un mode particulier de réalisation de l'invention ;
- la figure 2 est une vue de côté partielle schématique de l'atterrisseur de la figure 1 ;
- la figure 3 est une vue analogue à la figure 1 d'un atterrisseur équipé d'un ensemble de roue freinée de ;
- la figure 4 est une vue analogue à la figure 1 d'un atterrisseur équipé d'un ensemble de roue freinée selon un mode particulier de réalisation de l'invention ;
- la figure 5 est une vue en perspective de la couronne supportant les actionneurs et équipant l'ensemble de roue freinée illustré à la figure 4 ;
- les figures 6 et 7 sont des schémas de variantes de réalisation de la couronne de la figure 5 ;
- les figures 8 à 11 sont des schémas de variantes de réalisation des guides de la couronne recevant les actionneurs.

### DESCRIPTION DETAILLEE DE L'INVENTION

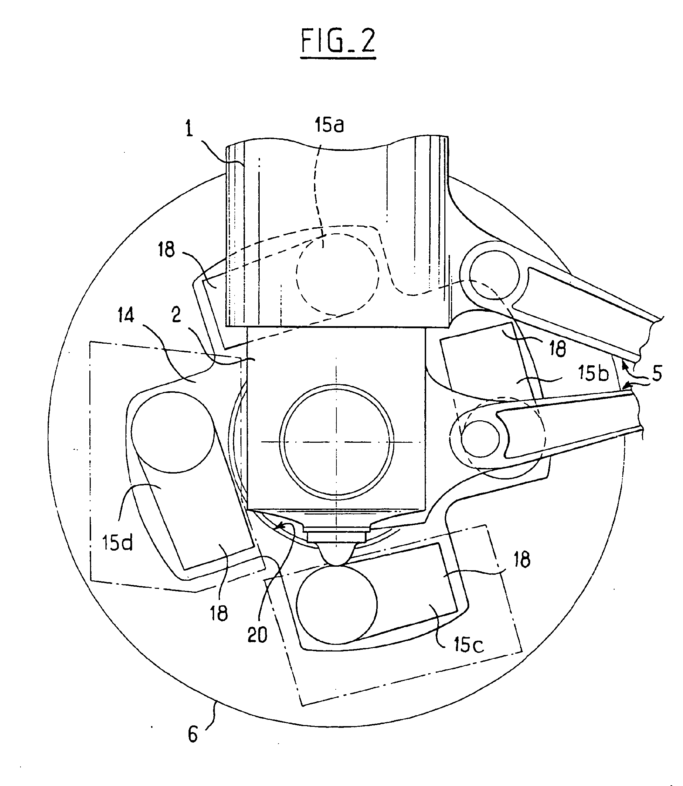

Selon un mode de réalisation de l'invention illustré aux figures 1 et 2, l'atterrisseur d'aéronef comprend un caisson 1 dans lequel coulisse une tige 2. Le caisson 1 est articulé à l'aéronef et est stabilisé en position basse par un dispositif de contreventement (non représenté). La tige 2 porte un essieu 3 en partie basse, destiné à recevoir un ensemble de roue freinée 4. La tige 2 est empêchée de tourner dans le caisson 1 par un compas 5 comprenant deux branches articulées respectivement au caisson 1 et à la tige 2.

L'ensemble de roue freinée comporte une roue comprenant une jante 6 qui porte un pneumatique non représenté et qui est montée pour tourner sur l'essieu 3 au moyen de roulements 7.

On parlera dans la suite de direction axiale pour désigner une direction parallèle à l'axe de la jante 6 lorsqu'elle est montée sur l'essieu 3, de direction radiale pour désigner une direction perpendiculaire à la direction précédente et concourant avec l'axe de la jante 6, et enfin de direction latérale pour désigner une direction perpendiculaire aux deux précédentes.

Dans l'intérieur de la jante 6 s'étend une pile de disques 8 ayant un axe central coïncidant avec l'axe de rotation de la jante 6. La pile de disques 8 comporte, en alternance, des disques rotors 8.1 (un seul est référencé) qui sont astreints à tourner avec la jante 6 par l'effet de l'engagement d'appendices 9 avec des cannelures 10 qui s'étendent à l'intérieur de la jante 6, et des disques stators 8.2 (un seul est référencé) qui sont astreints à rester immobile par l'effet de l'engagement d'appendices 11 reçus dans des cannelures (non visibles) d'un tube de reprise de couple 12 vissé sur l'essieu 3.

La pile de disques 8 s'étend entre un fond 13 fixe rapporté sur le tube de reprise de couple 12, et une couronne 14 également rapportée sur le tube de reprise de couple 12 (par des vis de fixation non représentées). La couronne 14 porte des actionneurs électromécaniques modulaires 15 qui comportent chacun un poussoir 16 déplaçable vers la pile des disques 8 au moyen d'un moteur électrique 18 (visible à la figure 2) pour appliquer de façon commandée une pression sur la pile de disques 8.

Les actionneurs 15 sont fixés de façon démontable sur la couronne 14 (au moyen de vis de fixation non représentées) et sont prévus pour être démontés du côté de la couronne 14 opposé à la pile de disques 8, c'est-à-dire dans la direction axiale vers le caisson 1 et la tige 2. Les actionneurs 15 comportent une partie de carter 19 qui s'étend au travers de la couronne 14. Les flèches 17 sur la figure 1 symbolisent la direction de démontage des actionneurs.

Comme cela est particulièrement visible à la figure 2, les actionneurs 15a et 15b sont, dans leur position en opération illustrée, directement en regard dans la direction 17 de la structure de l'atterrisseur, de sorte qu'ils ne sont pas démontables. Par contre, les actionneurs 15c et 15d disposent d'un espace libre qui s'étend en regard desdits actionneurs dans la direction 17 permettant leur démontage selon ladite direction. Ces espaces libres sont symbolisés sur les figures 1 et 2 par des zones délimitées par des traits mixtes.

Pour permettre le démontage des actionneurs 15a et 15b sur l'aéronef, on prévoit selon l'invention de rapporter la couronne 14 sur une portée cylindrique circulaire 20 du tube de reprise de couple 12. Pour démonter les actionneurs 15a ou 15b, il suffit alors de retirer les vis de fixation solidarisant la couronne 14 au tube de reprise 12, puis de faire tourner la couronne 14 sur la portée 20 de façon à amener l'actionneur 15a ou l'actionneur 15b dans une position de démontage (par exemple celle occupée en opération par l'actionneur 15c ou l'actionneur 15d). Dans cette position, les actionneurs 15a ou 15b peuvent alors être facilement démontés.

La portée 20 est particulièrement avantageuse en ce qu'elle permet un guidage de la couronne 14 en rotation qui est alors apte à tourner facilement sans risque de tomber sur l'essieu 3.

Selon une variante non représentée de ce mode de réalisation, la couronne 14 n'est plus rapportée sur le tube de reprise de couple 12, mais directement sur l'essieu 3. La portée 20 est alors aménagée sur une portion de l'essieu 3 pour recevoir la couronne 14 à rotation.

Selon une autre variante non représentée, la couronne n'est pas prévue pour être mobile en bloc après désolidarisation. Au moins un actionneur non démontable dans sa position en opération est alors monté sur une portion mobile de la couronne pour pouvoir amener ledit actionneur dans une position de démontage en regard de laquelle s'étend un espace libre.

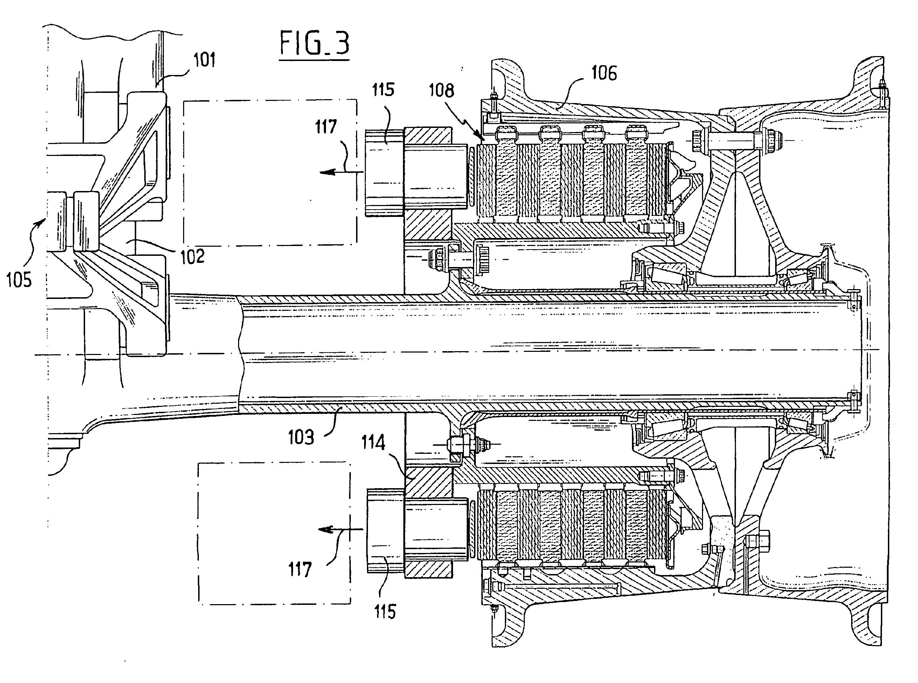

A la figure 3 sur laquelle les références des éléments correspondants avec ceux déjà référencés sont augmentés d'une centaine, les actionneurs 115 sont toujours prévus pour être démontés selon la direction axiale, symbolisée par les flèches 117. Ici, l'essieu 103 a une longueur suffisante pour qu'un espace libre s'étende en regard de tous les actionneurs, y compris ceux qui sont directement en regard de l'atterrisseur dans la direction axiale. Ici, les positions en opération de tous les actionneurs sont donc également des positions de démontage. Il est alors possible de démonter les actionneurs sans pour autant qu'il soit nécessaire de faire tourner la couronne 114.

Néanmoins, la longueur ainsi donnée à l'essieu 3 a pour conséquence d'augmenter le poids de l'atterrisseur ainsi que son encombrement.

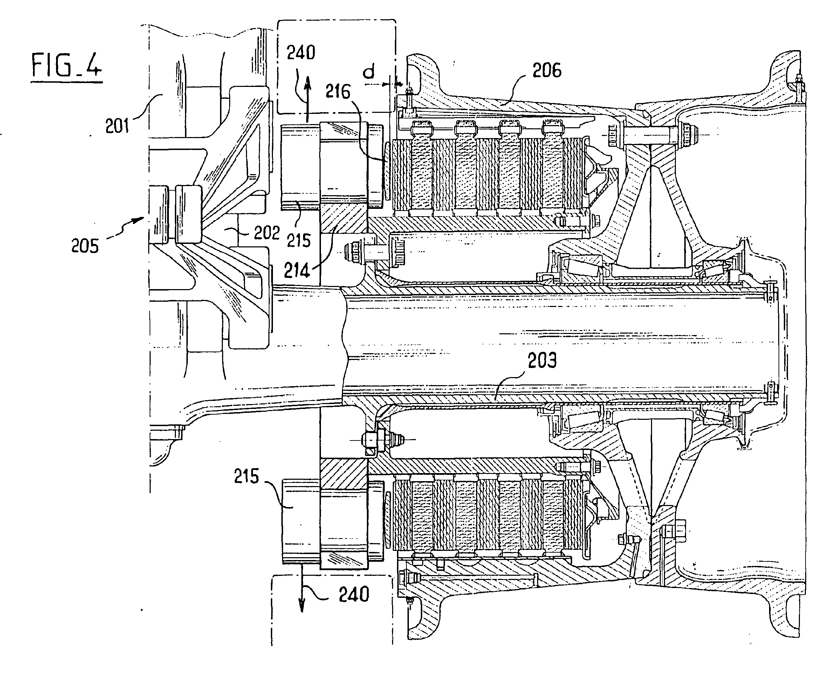

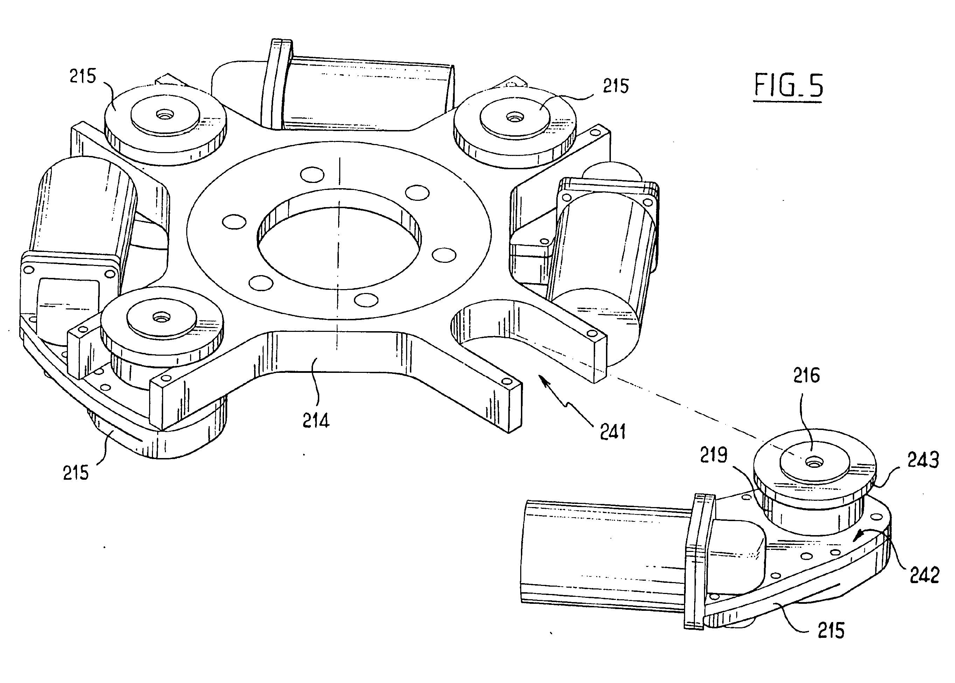

Ces inconvénients sont évités grâce à un mode particulier de réalisation de l'invention illustré aux figures 4 et 5 sur lesquelles les références des éléments correspondants avec ceux référencés précédemment sont encore augmentés d'une centaine.

Les actionneurs 215 et la couronne 214 sont prévus de sorte que les actionneurs soient démontables selon une direction 240 essentiellement radiale, concourante avec l'axe de la roue 206.

Comme cela est particulièrement visible à la figure 4, les espaces libres qui reçoivent les actionneurs en position démontée sont alors situés en regard du bord périphérique de la couronne, ce qui permet de raccourcir l'essieu 203 au strict nécessaire, tout en évitant, ici aussi, de prévoir une couronne désolidarisable.

Pour rendre ce démontage possible, il est important de s'assurer, au moins lorsque le poussoir 216 est en position rentrée, que celui-ci soit en retrait par rapport à la roue 206, comme cela est illustré sur la figure 4 par la distance d prise entre la face externe du poussoir 216 et l'extrémité de la jante 206.

En tout état de cause, il est avantageux de commander la rentrée du poussoir 216 avant de procéder au démontage de l'actionneur 215, d'une part pour réduire l'encombrement de l'actionneur 215 lors de sa manipulation, et d'autre part pour protéger le poussoir de chocs éventuels.

Comme cela est visible à la figure 5, la couronne 214 comporte des extensions radiales 241 en forme de U qui forment un guide aussi bien pour le montage que pour le démontage d'un actionneur 215. Pour faciliter la mise en place de l'actionneur, la partie de carter 219 qui s'étend au travers de la couronne 214 est délimitée d'une part par un flanc 242 du carter de l'actionneur et d'autre part par une collerette 243. Le flanc 242 et la collerette 243 sont séparés d'une distance légèrement supérieure à l'épaisseur des branches du U de l'extension radiale 241, et les branches du U sont écartées d'une distance légèrement supérieure au diamètre de la partie de carter 219, de sorte que l'extension radiale opère une guidage non seulement dans un sens latéral, mais également dans un sens axial.

Ce guidage facilite considérablement le démontage ou la mise en place des actionneurs, notamment pour les actionneurs qui sont situés sous l'essieu, dans une partie peu visible de l'atterrisseur.

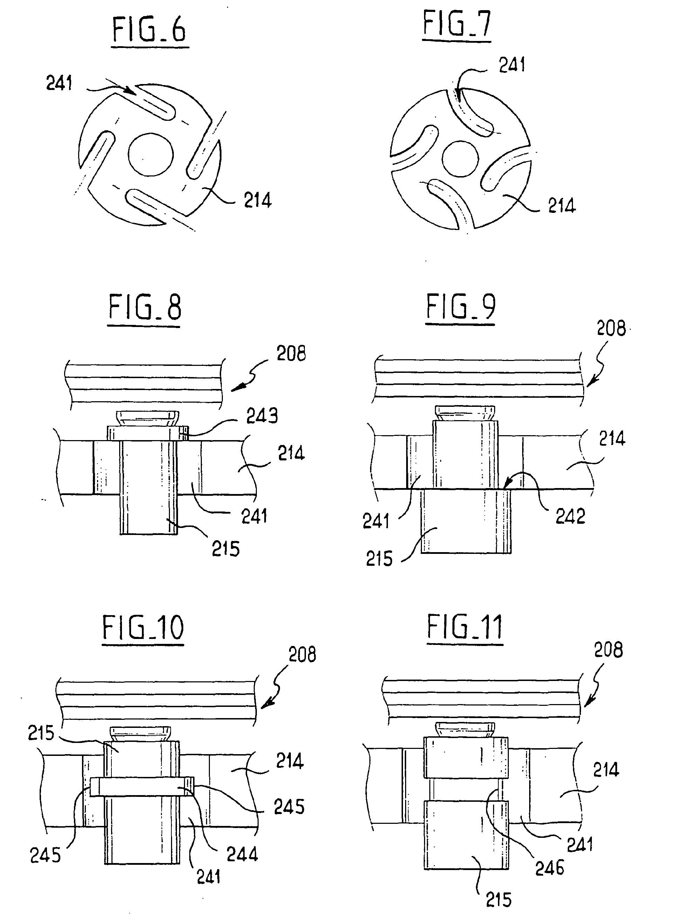

Selon une variante illustrée à la figure 6, les guides 241 définissent une direction de démontage qui n'est pas concourante avec l'axe central de la couronne 214. Cette liberté permet toutes les orientations possibles des directions de démontage des actionneurs, celles-ci pouvant même être différentes d'un actionneur à l'autre.

Selon une variante illustrée à la figure 7, les guides 241 peuvent ne pas être rectilignes, mais courbes, au moins en partie.

Il importe en tous les cas que la trajectoire de démontage s'étende sensiblement dans un plan perpendiculaire à l'axe central de la couronne, qui coïncide avec l'axe central de la roue ou de la pile de disques. On pourra cependant admettre que la trajectoire de démontage comporte une légère composante axiale.

Comme illustré aux figures 8 à 11, le guidage axial de l'actionneur 215 peut être assuré de plusieurs façons. Dans une première variante illustrée à la figure 8, l'actionneur 215 est en appui sur la couronne 214 uniquement du côté de celle-ci en regard de la pile de disques 208, par l'intermédiaire de la collerette 243. Le guidage n'est donc pas positif dans la direction axiale. Néanmoins, l'appui d'un seul côté est suffisant pour permettre une mise en place aisée de l'actionneur 215.

Selon une variante illustrée à la figure 9, l'actionneur est en appui sur la couronne 214 uniquement du côté opposé à la pile de disques 208.

Selon une variante illustrée à la figure 10, l'actionneur comporte une collerette 244 qui est engagée dans des rainures homologues 245 taillées dans les branches du U de l'extension radiale 241. Inversement, selon une variante illustrée à la figure 11, l'actionneur comporte une gorge 246 pour recevoir des tenons homologues 247 s'étendant en saillie intérieure des branches du U de l'extension radiale 241.

L'invention n'est pas limitée aux modalités particulières de l'invention qui viennent d'être décrites, mais bien au contraire englobe toute variante entrant dans le cadre de l'invention tel que défini par les revendications.

## Revendications

1. Atterrisseur d'aéronef, comprenant au moins un essieu (3;103;203) pour porter au moins un ensemble de roue freinée qui comporte une roue avec une jante (6;106;206) montée pour tourner sur l'essieu, une pile de disques (8;108;208) agencée pour imposer sur la roue un couple de freinage en réponse à une pression imposée sur la pile de disques, et un support (14 ;114 ;214) portant des actionneurs électromécaniques (15 ;115 ;215) modulaires démontables unitairement s'étendant en regard de la pile de disques pour appliquer de façon commandée une pression sur la pile de disques, dans lequel l'actionneur est associé à des moyens de son déplacement depuis une position en opération à une position de démontage, un espace libre de dimensions suffisantes pour recevoir l'actionneur s'étendant, suivant une trajectoire de démontage, directement en regard de l'actionneur lorsqu'il est en position de démontage, insert from page 13; insert from page 13

2. Atterrisseur selon la revendication 1, dans lequel le support est guidé sur un tube de reprise de couple autour desquels les disques s'étendent en rotation les moyens de déplacement comprenant le support (14) des actionneurs (15) qui est libérable en bloc. les moyens de déplacement comprenant le support (14) des actionneurs (15) qui est libérable en bloc. 4, **caractérisé en ce que** le support (14) est guidé en rotation 10 par rapport à l'atterrisseur de façon à permettre, après libération, le déplacement par rotation d'au moins un actionneur (15a,15b) depuis sa position en opération vers sa position de démontage.

3. Atterrisseur selon la revendication 1, carac-15 térisé en ce que les actionneurs (215) sont prévus pour être démontés du support (214) selon une trajectoire de démontage s'étendant sensiblement dans un plan perpendiculaire à un axe de rotation de la roue (6).

4. Procédé de maintenance d'un atterrisseur selon la revendication 1, comportant l'étape d'identifier un actionneur (15;115;215) à remplacer, de le démonter sans démonter ni la jante (6;106;206) ni la pile de disques (8;108;208), et de le remplacer par un autre actionneur, **caractérisé en ce qu'**il comporte l'étape de provoquer le retrait d'un poussoir (16;116;216) de l'actionneur à remplacer de façon à amener le poussoir en position rentrée préalablement au démontage de l'actionneur.

## Claims

1. Airplane landing gear comprising at least one axle (3; 103; 203) for carrying at least one brake-and-wheel assembly comprising a wheel with a rim (6; 106; 206) mounted to rotate on the axle, a stack of disks (8; 108; 208) arranged to apply braking torque to the wheel in response to pressure applied to the stack of disks, and a support (14; 114; 214) carrying modular electromechanical actuators (15; 115; 215) that can be removed individually and that extend facing the stack of disks in order to apply pressure in controlled manner to the stack of disks, in which the actuator is associated with displacement means enabling it to be moved from an operating position to a disassembly position, an empty space of dimensions sufficient to receive the actuator extending along a disassembly path directly facing the actuator when it is in the disassembly position, the displacement means comprise the support (14) for the actuators (15) which is releasable as a unit; **characterized in that** the support (14) is guided to turn relative to the landing gear in such a manner as to make it possible, once it has been released, to move at least one actuator (15a, 15b) by turning from its operating position towards its disassembly position.

2. Landing gear according to claim 1, in which the support is guided in rotation on a torque-takeup tube around which the disks extend.

3. Landing gear according to claim 1, **characterized in that** the actuators (215) are designed to be removed from the support (214) along a disassembly trajectory extending substantially in a plane perpendicular to an axis of rotation of the wheel (6).

4. A method of maintaining landing gear in accordance with claim 1, the method comprising the step of identifying an actuator (15; 115; 215) for replacement, of removing it while removing neither the rim (6; 106; 206) nor the stack of disks (8; 108; 208), and replacing it with another actuator, the method being **characterized in that** it includes the step of causing a pusher (16; 116; 216) of the actuator for replacement to be withdrawn so as to bring the pusher into the retracted position prior to removing the actuator.

## Patentansprüche

1. Flugzeugfahrwerk, umfassend mindestens eine Radachse (3; 103; 203), die dazu bestimmt ist, mindestens eine Einheit aus einem gebremsten Rad zu tragen, die ein Rad mit einer Felge (6; 106; 206) umfasst, die drehbar auf der Radachse gelagert ist, einen Stapel von Scheiben (8; 108; 208), der so ausgebildet ist, dass er auf das Rad ein Bremsdrehmoment in Antwort auf einen Druck ausübt, der auf den Stapel von Scheiben ausgeübt wird, sowie einen Träger (14; 114; 214), der modulare, einzeln demontierbare elektromechanische Aktuatoren (15; 115; 215) trägt, die sich gegenüber dem Stapel von Scheiben erstrecken, um auf gesteuerte Weise einen Druck auf den Stapel von Scheiben auszuüben, wobei der Aktuator mit Mitteln für seine Verschiebung aus einer Arbeitsposition in eine Demontageposition verbunden ist, wobei sich ein freier Raum mit Abmessungen, die zur Aufnahme des Aktuators ausreichen, entlang einer Demontagebahn direkt gegenüber dem Aktuator erstreckt, wenn er in einer Demontageposition ist,
wobei die Verschiebungsmittel den Träger (14) für die Aktuatoren (15) umfassen, der als Ganzes gelöst werden kann,
**dadurch gekennzeichnet, dass** der Träger (14) gegenüber dem Fahrwerk in Drehrichtung geführt wird, derart, dass er nach dem Lösen die Verschiebung mindestens eines Aktuators (15a, 15b) von seiner Arbeitsposition in seine Demontageposition durch Drehung ermöglicht.

2. Fahrwerk nach Anspruch 1, wobei der Träger für eine Drehung auf einem Drehmomentaufnahmerohr geführt wird, um das sich die Scheiben erstrecken.

3. Fahrwerk nach Anspruch 1, **dadurch gekennzeichnet, dass** die Aktuatoren (215) so vorgesehen sind, dass sie vom Träger (214) entlang einer Demontagebahn demontiert werden können, die sich im Wesentlichen in einer zu einer Rotationsachse des Rades (6) senkrechten Ebene erstreckt.

4. Verfahren zum Warten eines Fahrwerks nach Anspruch 1, umfassend den Schritt des Identifizierens eines zu ersetzenden Aktuators (15; 115; 215), des Demontierens desselben, ohne die Felge (6; 106; 206) oder den Stapel von Scheiben (8; 108; 208) zu demontieren, und des Ersetzens desselben durch einen anderen Aktuator, **dadurch gekennzeichnet, dass** es den Schritt des Auslösens des Rückzugs eines Stößels (16; 116; 216) vom zu ersetzenden Aktuator umfasst, derart, dass der Stößel vor der Demontage des Aktuators in eine zurückgezogene Position gebracht wird.
